# EUROPEAN PATENT SPECIFICATION

(11) **EP 2 912 283 B1**
(45) Date of publication and mention of the grant of the patent: **07.08.2019**
(21) Application number: 13759506.2
(22) Date of filing: 06.09.2013
(51) Int. Cl.: B23P 19/10, F01D 25/28, F01D 25/24

(54) **AN ALIGNMENT DEVICE FOR A TURBOMACHINE COMPONENT AND TURBOMACHINE INCLUDING SUCH DEVICE**
AUSRICHTUNGSVORRICHTUNG FÜR EINE TURBOMASCHINE UND TURBOMASCHINE MIT SOLCH EINER VORRICHTUNG
DISPOSITIF D'ALIGNEMENT POUR COMPOSANT DE TURBOMACHINE ET TURBOMACHINE COMPRENANT CE DISPOSITIF

(30) Priority: 11.09.2012 IT CO20120042
(43) Date of publication of application: 02.09.2015
(73) Proprietor: Nuovo Pignone S.r.l., 50127 Florence (IT)
(72) Inventor: MARUCCI, Daniele, I-50127 Florence (IT); AVANZINI, Andrea, I-50127 Florence (IT); LAZZERI, Marco, I-50127 Florence (IT); FRETTALLONE, Marco, I-50127 Florence (IT)
(74) Representative: BRP Renaud & Partner mbB Rechtsanwälte Patentanwälte Steuerberater
(86) International application number: PCT/EP2013/068473
(87) International publication number: WO 2014/040920

(56) References cited:
- EP-A2- 2 270 316
- KR-A- 20120 070 109
- US-A1- 2005 086 788
- US-A1- 2009 014 621
- US-A1- 2011 005 054

## Description

### TECHNICAL FIELD

The present invention relates to an alignment device for accurately aligning a component of a turbomachine with respect to a baseplate and rotation axis of the turbomachine.

### BACKGROUND ART

Typically, when packaging a turbomachine, all the components have to be aligned with respect to the turbomachine rotation axis. Correct positioning of the components is very important because an incorrect alignment can result in internal flow distortion, high vibrations and potential damage to machinery due to mechanical contact between turbomachinery and other components.

In a gas turbine turbomachine installation typical components include baseplate, inlet and exhaust plena, turbocompressor, combustor and gas turbine. The position of plena, combustor and rotating components is normally defined with respect to the baseplate in order to achieve the correct alignment along the rotation axis.

Alignment of the inlet plenum is particularly challenging due to the dimension and weight of the carpentry.

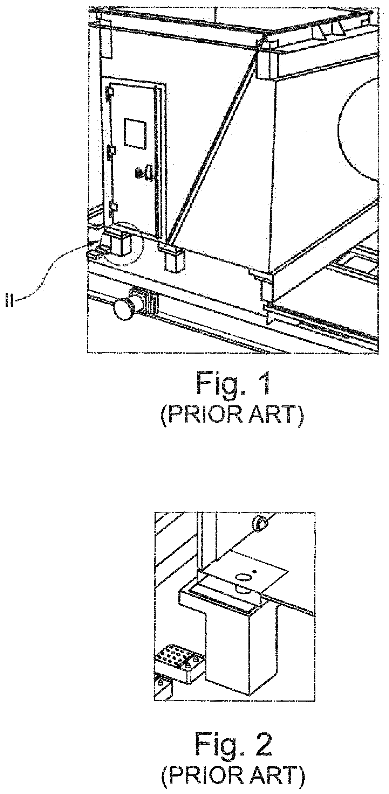

With reference to figures 1 and 2, in a known solution plenum 100 is placed on a plurality of supports 110 provided on the baseplate B. Vertical alignment of the plenum 100 is achieved through a plurality of shims 120 respectively placed between a plenum base plate 105 and the supports 110. Lateral alignment is achieved through screws (not shown) operated for regulation from outside the plenum 100.

The main disadvantages of the above solution derives from the fact that, in order to achieve the desired vertical alignment, shims 120 have to be positioned below the plenum 100 after the plenum 100 is placed on the supports 110. This results in complex and time-demanding alignment operation. In addition, alignment and checking operations must be performed separately, i.e. the alignment has to be checked after one or more of the shims 120 are placed. If the alignment is not acceptable, shims 120 have to be changed or modified. After such regulations, checking operations have to be performed again. Shims regulation and position checking have to be alternated till a satisfactory alignment result is achieved.

It would be desirable to provide an improved alignment device for accurately aligning a component of a turbomachine with respect to a baseplate of the turbomachine, thus avoiding the above inconveniencies.

It would also be desirable to such alignment condition is firm and maintained in time even during operation of the turbomachine.

US 2009/014621 A1 describes a mount assembly for securing a machine base to a foundation including: a first block secured to the machine base and a second block secured to the foundation. First and second blocks can be aligned horizontal with the use of bolts and vertically with the use of a flat shim plate.

US 2005/086788 A1 describes a tooling system including a workstation assembly and a toolkit, is for performing an operation on a valve assembly.

### SUMMARY

The invention is defined by the independent claims. In the following description, anything referred to as an embodiment which does not fall within the scope of the claims is to be understood as an example useful for understanding the invention.

According to a first embodiment, the present invention accomplish such an object by providing a turbomachine including a component fixedly constrainable to a baseplate of said turbomachine and an alignment device for regulating the position of said component with respect to the baseplate, wherein the alignment device includes at least a first bolt a second bolt and a third bolt, each bolt including a regulating screw respectively coupled with a threaded through hole in said component, each threaded hole defining a respective alignment axis for said component, each screw having a respective axial end which is susceptible of contacting said baseplate for defining the position of the component along each axis respectively, each bolt including a blocking nut for respectively blocking said regulating screws in said threaded holes; the alignment device further includes a fourth fixing screw which is screwable in a threaded hole of the baseplate (B) for fixing said component to the baseplate.

One of the regulating screws of one of said bolts has a through hole coaxial with the respective alignment axis for housing said fourth fixing screw.

According to a further advantageous feature of the first embodiment, the component of the turbomachine includes an inner cavity, said regulating screws of said bolts and said fixing screw being operatable from inside said inner cavity for respectively defining the position of the component and for fixing said component to the baseplate.

The solution of the present invention allows to:
- correctly align the component of the turbomachine without requiring additional parts (shims) to be placed between the component and the baseplate of the turbomachine;
- perform quicker and easier operations, as checking activities can be performed during alignment operation;
- perform both the alignment and measurements from the inside the component.

In a second embodiment, the present invention provides an alignment device for regulating the position of a component of a turbomachine with respect to a baseplate of the turbomachine, wherein the alignment device includes at least a first bolt a second bolt and a third bolt, each bolt including a regulating screw respectively coupled with a threaded through hole in said component, each threaded hole defining a respective alignment axis for said component, each screw having a respective axial end which is susceptible of contacting said baseplate for defining the position of the component along each axis respectively, each bolt including a nut for respectively blocking said regulating screws in said threaded holes; the alignment device further includes a fourth fixing screw which is screwable in a threaded hole of the baseplate for fixing said component to the baseplate. One of the regulating screws of one of said bolts has a through hole coaxial with the respective alignment axis for housing said fourth fixing screw.

The alignment device of the present invention allows to quickly and efficiently position components of a turbomachine with respect to the turbomachine baseplate, in order to correct align each component along the turbomachine rotation axis. Particularly, albeit not exclusively, such an alignment device is usable to align large and heavy components, like the inlet plenum in a gas turbine machine.

According to a third embodiment, the present invention provides a method for regulating the position of a component of a turbomachine with respect to a baseplate of the turbomachine, wherein the alignment method includes the steps of:
- providing at least a first bolt a second bolt and a third bolt, each bolt including a regulating screw and a blocking nut, as well as a fourth fixing screw,
- providing in said component at least a first threaded through hole, a second threaded through hole and a third threaded through hole each threaded hole defining a respective alignment axis for said component, each threaded hole having the same diameter of said first, second and third bolts, respectively
- coupling each regulating screw of said first, second and third bolts with said first, second and third threaded through hole, respectively, as well as, in said baseplate, a threaded hole,
- screwing the regulating screws in the threaded through holes in such a way that a respective axial end of each screw contacts said baseplate for defining the position of the component along each axis respectively,
- blocking said regulating screws in said threaded through holes with said blocking nut, respectively,
- screwing the fourth fixing screw in the threaded hole of the baseplate thereby fixing the component to the baseplate.

One of the regulating screws of one of said bolts is provided with a through hole coaxial with the respective alignment axis for housing the fourth fixing screw, and the alignment method further including the step of inserting the fourth fixing screw in the through hole of the regulating screw before screwing the fourth fixing screw in the threaded hole of the baseplate (B).

The same advantages described above with reference to the first and second embodiment of the present invention are accomplished by this third embodiment.

### BRIEF DESCRIPTION OF THE DRAWINGS

Other objects, features and advantages of the present invention will become evident from the following description of the embodiments of the invention taken in conjunction with the following drawings, wherein:
- Figure 1 is a perspective view of a conventional and known-in-the-art alignment device for a component of a turbomachine;
- Figure 2 is an enlarged view of the detail II shown in figure 1;
- Figure 3 is a perspective view showing a turbomachine according to the present invention;
- Figure 4 is a perspective view showing a component of the turbomachine of Figure 3;
- Figures 5 is a detailed view of the component of Figure 4, showing an alignment device according to the present invention;
- Figure 6 is a more view of the alignment device of Figure 5;
- Figure 7 is a block diagram schematically showing an alignment method according to the present invention.

### DETAILED DESCRIPTION OF SOME PREFERRED EMBODIMENTS OF THE INVENTION

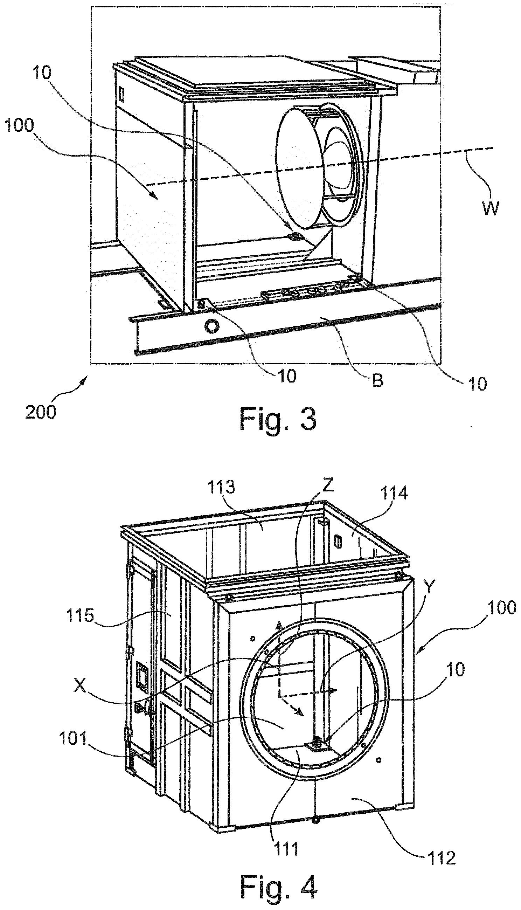

A first and a second embodiment of the present invention are shown in figures 3 to 6.

With reference to figure 3, a turbomachine 200 comprise a baseplate B and a plurality of components directly or indirectly fixable to the baseplate B in order to be correctly aligned along an axis of rotation W of the turbomachine 200.

In the embodiment of figure 3 the turbomachine 200 is constituted by a gas turbine machine, whose components include an inlet plenum 100, a compressor 150, a combustor 160, a gas turbine 170 and an outlet plenum (not shown). Both the compressor 150 and the turbine 170 includes rotors which rotate around axis W.

In general, according to other embodiments (not shown), the present invention is also applicable to other types of turbomachine, whenever a component of the turbomachine 200 has to be fixedly constrained to the baseplate B by means of an alignment device 10 having the characteristics described in the following.

In the gas turbine turbomachine 200 of figure 3, the alignment device 10 is at least associated with the inlet plenum 100, for regulating the position of the inlet plenum 100 with respect to the baseplate B.

With reference to figure 4, the inlet plenum 100 comprises a rectangular base 111, a front wall 112 having a circular aperture 116, a rear wall 113 opposite to the front wall 112 and two lateral walls 114, 115, extending between the front and the rear walls 112, 113. The four walls 112, 113, 114, 115 are orthogonal to the base 111, each wall extending from a respective edge of the base 111. In the inlet plenum 100, the volume comprised between the base 111 and the walls 112, 113, 114, 115 defines a parallelepiped-shaped cavity 101.

At the four corners of the base 111 of the inlet plenum 100, the turbomachine 200 comprises four alignment devices 10 (only three alignment devices 10 are visible in figure 3) for regulating the position of the inlet plenum 100 with respect to the baseplate B, in such a way that the circular aperture 116 is aligned with the rotation axis W. This assures a correct coupling between the inlet plenum 100 and an inlet section 151 of the compressor 150.

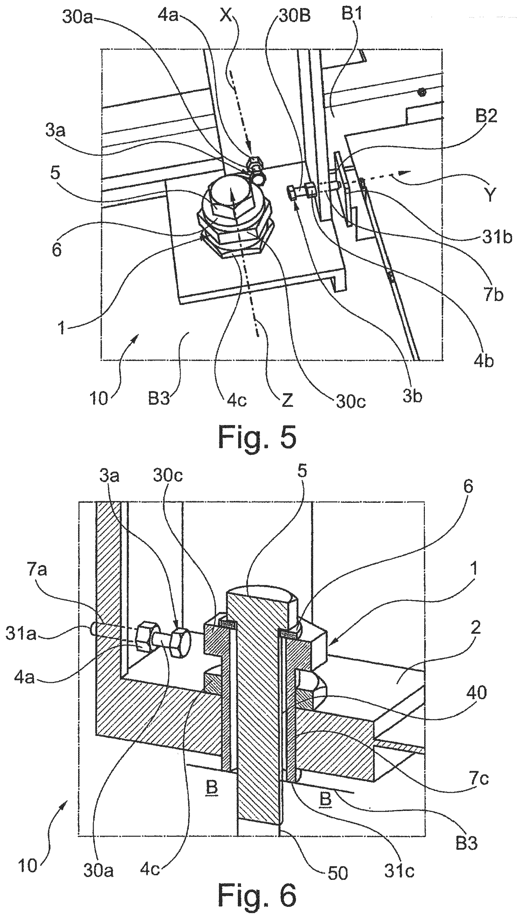

Figures 5 and 6 show the corner between the base 111 and the front and lateral walls 112, 114 of the inlet plenum 100, including one of the four alignment devices 10 for aligning the plenum 100 with respect to the baseplate B. The description which follows will be referred to the alignment device of figures 5 and 6. Each of the other three alignment devices 10 are identical to that of figures 5 and 6, each being different from the others only for position and orientation.

Each alignment device 10 includes a first bolt 3a, a second bolt 3b and a third bolt 1, each bolt 3a, 3b, 1 including a respective regulating screw 30a, 30b, 30c respectively coupled with a threaded through hole 7a, 7b, 7c provided in the inlet plenum 100 in the walls and in the base 111 of the inlet plenum 100. In the embodiments of figures 5 and 6, the threaded through hole 7a, 7b respectively coupled with the regulating screws 30a, 30b of the first and second bolt 3a, 3b are provided in the lateral wall 114 and in the rear wall 113, respectively. In all the embodiments threaded through hole 7c coupled with the regulating screw 30c of the third bolt 1 is provided in the base 111.

Each threaded through hole 7a, 7b, 7c defines a respective alignment axis X, Y, Z for the inlet plenum 100. The alignment axes X, Y, Z are mutually orthogonal, the axes X, Y of the first and second bolt 3a, 3b being oriented horizontally, i.e. parallel to the baseplate B, the axis Z of the third bolt 1 being oriented vertically, i.e. orthogonally to the baseplate B. In the embodiments of figures 5 and 6, when the inlet plenum is correctly positioned on the baseplate B together with the other components of the turbomachine 200, the axis X of the first bolt is orthogonal to the rotation axis W and the axis Y is parallel to the rotation axis W.

The regulating screws 30a, 30b, 30c are inserted in the respective threaded through hole 7a, 7b, 7c in such a way that each screw head is placed in the cavity 101. Each of the screws 30a, 30b, 30c can be therefore operated by an operator standing inside the inlet plenum 100, i.e. in the cavity 101.

Opposite to each screw head, each screw 30a, 30b, 30c has a respective axial end 31a, 31b, 31c which is susceptible of protruding outside the inlet plenum 100 when each screw is coupled with the respective through hole 7a, 7b, 7c. Each axial end 31a, 31b, 31c contacts a respective surface B1, B2, B3, provided in the baseplate B and oriented orthogonally to the alignment axes X, Y, Z, respectively. The length of the portion of each screw 30a, 30b, 30c which protrudes outside the inlet plenum 100 defines the distance of the inlet plenum 100, along each alignment axis X, Y, Z, from the surfaces B1, B2, B3 of the baseplate B, respectively.

Each bolt 3a, 3b, 1 includes a blocking nut 4a, 4b, 4c for respectively blocking each regulating screw 30a, 30b, 30c in the respective threaded hole 7a, 7b, 7c. Each blocking nut 4a, 4b, 4c is coupled with a respective portion of each regulating screw 30a, 30b, 30c immediately under the head thereof. When each screw 30a, 30b, 30c is respectively coupled with the respective through hole 7a, 7b, 7c, each nut 4a, 4b, 4c is operatable from inside the cavity 101 to be screwed against the wall 112, 113, 114, 115 or base 111 of the inlet plenum 100 which is provided with the threaded through hole 7a, 7b, 7c, respectively.

While standing inside the cavity 101, an operator can easily regulate the screws 30a, 30b, 30c, thus regulating the position of the inlet plenum 100 along each alignment axis X, Y, Z. From the same standing position, after checking the position of the inlet plenum 100, the operator can easily block each regulating screw 30a, 30b, 30c through the respective blocking nut 4a, 4b, 4c, thus defining the position of the inlet plenum 100 along each alignment axis X, Y, Z.

The first and second bolt 3a, 3b are of the conventional type.

The third bolt 1 comprises a longitudinal through hole 40 in the regulating screw 30c, which is coaxial with the respective alignment axis Z when the respective screw 30c is coupled with the respective through hole 7c. The hole 40 houses a fourth fixing screw 5 which is couplable with a threaded hole 50 provided in the surface B3 of the baseplate B for fixing the position of the inlet plenum 100 with respect to the baseplate B. The diameter of the through hole 40 is slightly greater than the diameter of the fourth fixing screw 5 (for example, the difference between the diameters of this hole and this screw is a value in the range of 10-20 mm), in order to allow sufficient lateral (i.e. X and Y) movement (e.g. +/- 5-10 mm) of the inlet plenum during alignment. The head of the fourth fixing screw 5 is operatable from inside the cavity 101. A washer 6 is provided between the head of the regulating screw 30c and the head of the fixing screw 5 in order to provide a convenient mating surface between the fourth fixing screw 5 and the third bolt 1. While standing inside the cavity 101 and after block each regulating screw 30a, 30b, 30c through the respective blocking nut 4a, 4b, 4c, the operator can also fix the position of the inlet plenum 100 with respect to the base plate B, by screwing the fourth fixing screw 5 in the threaded hole 50.

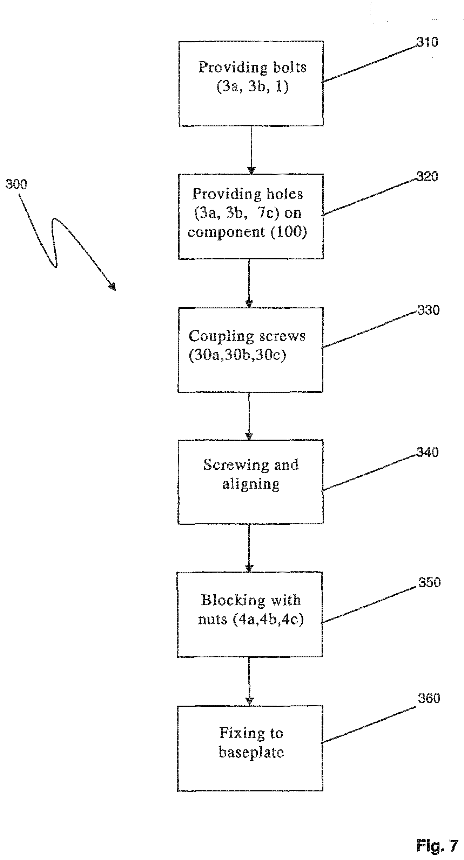

With reference to figures 3-7, according to a third embodiment of the present invention, an alignment method 300 for regulating the position of the inlet plenum 100 includes:
- a first step 310 of providing at least a first bolt 3a, a second bolt 3b and a third bolt 1, each bolt 3a, 3b, 1 including a regulating screw 30a, 30b, 30c and a blocking nut 4a,4b,4c, as well as a fourth screw 5, that is a "fixing screw" and not a "regulating screw",
- a second step 320 of providing, in the inlet plenum 100, a first, a second and third threaded through hole 7a, 7b, 7c, each threaded hole 7a, 7b, 7c defining a respective alignment axis X, Y, Z for the inlet plenum 100, each threaded hole 7a, 7b, 7c having the same diameter of said first, second and third bolts 3a,3b,1, respectively, as well as, in the baseplate B, a threaded hole 50,
- a third step 330 of coupling each regulating screw 30a,30b,30c of the first, second and third bolts 3a, 3b, 1 with the first, second and third threaded through holes 7a, 7b, 7c, respectively. The bolts 3a, 3b, 1 are coupled with the threaded through holes 7a, 7b, 7c in such a way that the heads of the regulating screws 30a,30b,30c and the nuts 4a,4b,4c are operatable from inside the same cavity 101 of the inlet plenum 100;
- a fourth step 340 of screwing the regulating screws 30a, 30b, 30c in the threaded through holes 7a, 7b, 7c in such a way that a respective axial end of each screw 30a, 30b, 30c contacts a respective surface B1, B2, B3 of the baseplate B for defining the position of the plenum 100 along each alignment axis X, Y, Z, respectively,
- a fifth step 350 of blocking the regulating screws 30a, 30b, 30c in the threaded through holes 7a, 7b, 7c with the respective blocking nut 4a, 4b, 4c;
- a sixth step 360 of inserting the fourth fixing screw 5 in a through hole 40 of the regulating screw 30c and fixing the inlet plenum 100 to the baseplate B by screwing the fourth fixing screw 5 in the threaded hole 50 provided in the surface B3 of the baseplate B. The through hole 40 is coaxial with the alignment axis Z of the third bolt 1.

In the embodiment of figure 6, one end of the shank of the screw 30c abuts on the surface B3 of the baseplate B; in this way, by screwing/unscrewing the screw 30c the position of the plenum 100 is regulated with respect to the baseplate B. Once the desired alignment position is reached, the plenum 10 is fixed to the baseplate B by means of the screw 5 and the hole 50.

It is to be noted that, in the advantageous embodiment of figure 6, the regulating screw, e.g. screw 30c, has an axial through hole for receiving the shaft of the fixing screw, e.g. screw 5. According to a variant of this embodiment, the fixing screw is external to the regulating screw; they are typically parallel to each other; the inlet plenum is provided with a non-threaded through hole for the fixing screw distinct from the through hole for the regulating screw; typically, they are close to each other and parallel to each other; the diameter of the fixing screw through hole is slightly greater than the diameter of the fixing screw (for example, the difference between the diameters of this hole and this screw is a value in the range of 10-20 mm), in order to allow sufficient lateral (i.e. X and Y) movement (e.g. +/- 5-10 mm) of the inlet plenum during alignment; also according to this variant, there is a threaded hole in the surface of the baseplate, approximately aligned with the through hole of the inlet plenum, for screwing the fixing screw.

All the embodiments of the present invention allows to accomplish the object and advantages cited above.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other example are intended to be within the scope of the claims if they have structural elements that do not differ from the literal language of the claims.

## Claims

1. An alignment device (10) for regulating the position of a component (100) of a turbomachine (200) with respect to a baseplate (B) of the turbomachine (200), wherein the alignment device (10) includes at least a first bolt (3a), a second bolt (3b) and a third bolt (1), each bolt (3a,3b,1) including a regulating screw (30a, 30b, 30c) respectively coupled with a threaded through hole in said component (100), each threaded through hole defining a respective alignment axis (X, Y, Z) for said component (100), each screw having a respective axial end which is susceptible of contacting said baseplate (B) for defining the position of the component (100) along each axis (X, Y, Z) respectively, each bolt (3a,3b,1) including a blocking nut (4a, 4b, 4c) for respectively blocking said regulating screws in said threaded holes;
the alignment device (10) further including a fourth fixing screw (5) which is screwable in a threaded hole (50) of the baseplate (B) for fixing said component (100) to the baseplate (B);
wherein one of the regulating screws (30c) of one of said bolts (1) has a through hole (40) coaxial with the respective alignment axis (Z) for housing said fourth fixing screw (5).

2. A turbomachine (200) including a component (100) fixedly constrainable to a baseplate (B) of said turbomachine (200) and an alignment device (10) according to claim 1 for regulating the position of said component (100) with respect to the baseplate (B).

3. The turbomachine (200) according to claim 2, wherein the diameter of said through hole (40) in said regulating screw (30c) is greater than the diameter of the said fourth fixing screw (5) in order to allow the lateral alignment.

4. The turbomachine (200) according to any of claims 2 to 3, wherein said alignment axes (X,Y, Z) are mutually orthogonal.

5. The turbomachine (200) according to any of claims 2 to 4, wherein said component (100) includes an inner cavity (101), said regulating screws (30a, 30b, 30c) of said bolts (3a,3b,1) and said fixing screw (5) being operatable from inside said inner cavity (101) for respectively defining the position of the component (100) and for fixing said component (100) to the baseplate (B).

6. The turbomachine (200) according to any of claims 2 to 5, wherein said turbomachine (200) is a gas turbine.

7. The turbomachine (200) according to any of claims 2 to 6, wherein said component (100) is an inlet plenum of said gas turbine turbomachine.

8. An alignment method (300) for regulating the position of a component (100) of a turbomachine (200) with respect to a baseplate (B) of the turbomachine (200), wherein the alignment method includes the steps of:
- providing (310) at least a first bolt (3a) a second bolt (3b) and a third bolt (1), each bolt (3a,3b,1) including a regulating screw (30a, 30b, 30c) and a blocking nut (4a,4b,4c), as well as a fourth fixing screw (5),
- providing (320), in said component (100), at least a first threaded through hole (7a), a second threaded through hole (7b) and a third threaded through hole (7c) each threaded hole (7a, 7b, 7c) defining a respective alignment axis (X, Y, Z) for said component (100), each threaded hole (7a, 7b, 7c) having the same diameter of said first, second and third bolts (3a,3b,1), respectively, as well as, in said baseplate (B), a threaded hole (50),
- coupling (330) each regulating screw (30a,30b,30c) of said first, second and third bolts (3a,3b,1) with said first, second and third threaded through hole (7a, 7b, 7c), respectively,
- screwing (340) the regulating screws (30a, 30b, 30c) in the threaded through holes (7a, 7b, 7c) in such a way that a respective axial end of each screw (30a, 30b, 30c) contacts said baseplate (B) for defining the position of the component (100) along each axis (X, Y, Z) respectively,
- blocking (350) said regulating screws (30a, 30b, 30c) in said threaded through holes (7a, 7b, 7c) with said blocking nut (4a,4b,4c), respectively,
- screwing (360) the fourth fixing screw (5) in the threaded hole (50) of the baseplate (B) thereby fixing the component (100) to the baseplate (B);
wherein one of the regulating screws (30c) of one of said bolts (1) is provided with a through hole (40) coaxial with the respective alignment axis (Z) for housing the fourth fixing screw (5), said method (300) further including the step of inserting (360) the fourth fixing screw (5) in the through hole (40) of the regulating screw (30c) before screwing the fourth fixing screw (5) in the threaded hole (50) of the baseplate (B).

## Patentansprüche

1. Ausrichtungsvorrichtung (10) zum Einstellen der Position einer Komponente (100) einer Turbomaschine (200) in Bezug auf eine Grundplatte (B) der Turbomaschine (200), wobei die Ausrichtungsvorrichtung (10) mindestens einen ersten Bolzen (3a), einen zweiten Bolzen (3b) und einen dritten Bolzen (1) einschließt, wobei jeder Bolzen (3a, 3b, 1) eine Stellschraube (30a, 30b, 30c) einschließt, die jeweils mit einem Gewindedurchgangsloch in der Komponente (100) gekoppelt ist, wobei jedes Gewindedurchgangsloch eine jeweilige Ausrichtungsachse (X, Y, Z) für die Komponente (100) definiert, wobei jede Schraube ein jeweiliges axiales Ende aufweist, das zum Kontaktieren der Grundplatte (B) zum Definieren der Position der Komponente (100) entlang jeder Achse (X, Y, Z) geeignet ist, wobei jeder Bolzen (3a, 3b, 1) eine Blockiermutter (4a, 4b, 4c) zum jeweiligen Blockieren der Stellschrauben in den Gewindelöchern einschließt;
wobei die Ausrichtungsvorrichtung (10) ferner eine vierte Befestigungsschraube (5) einschließt, die in ein Gewindeloch (50) der Grundplatte (B) zum Befestigen der Komponente (100) an der Grundplatte (B) geschraubt werden kann;
wobei eine der Stellschrauben (30c) eines der Bolzen (1) ein zur jeweiligen Ausrichtungsachse (Z) koaxiales Durchgangsloch (40) zum Aufnehmen der vierten Befestigungsschraube (5) aufweist.

2. Turbomaschine (200) einschließlich einer an einer Grundplatte (B) der Turbomaschine (200) fest beschränkbaren Komponente (100) und einer Ausrichtungsvorrichtung (10) nach Anspruch 1 zum Einstellen der Position der Komponente (100) in Bezug auf die Grundplatte (B).

3. Turbomaschine (200) nach Anspruch 2, wobei der Durchmesser des Durchgangslochs (40) in der Stellschraube (30c) größer ist als der Durchmesser der vierten Befestigungsschraube (5), um die seitliche Ausrichtung zu ermöglichen.

4. Turbomaschine (200) nach einem der Ansprüche 2 bis 3, wobei die Ausrichtungsachsen (X, Y, Z) zueinander orthogonal sind.

5. Turbomaschine (200) nach einem der Ansprüche 2 bis 4, wobei die Komponente (100) einen inneren Hohlraum (101) einschließt, wobei die Stellschrauben (30a, 30b, 30c) der Bolzen (3a, 3b, 1) und die Fixierschraube (5) von innerhalb des inneren Hohlraums (101) bedienbar sind, um jeweils die Position der Komponente (100) zu definieren und die Komponente (100) an der Grundplatte (B) zu befestigen.

6. Turbomaschine (200) nach einem der Ansprüche 2 bis 5, wobei die Turbomaschine (200) eine Gasturbine ist.

7. Turbomaschine (200) nach einem der Ansprüche 2 bis 6, wobei die Komponente (100) eine Einlasskammer der Gasturbinen-Turbomaschine ist.

8. Ausrichtungsverfahren (300) zum Einstellen der Position einer Komponente (100) einer Turbomaschine (200) in Bezug auf eine Grundplatte (B) der Turbomaschine (200), wobei das Ausrichtungsverfahren folgende Schritte einschließt:
- Bereitstellen (310) von mindestens einem ersten Bolzen (3a), einem zweiten Bolzen (3b) und einem dritten Bolzen (1), wobei jeder Bolzen (3a, 3b, 1) eine Stellschraube (30a, 30b, 30c) und eine Blockiermutter (4a, 4b, 4c) sowie eine vierte Befestigungsschraube (5) einschließt,
- Bereitstellen (320), in der Komponente (100), von mindestens einem ersten Gewindedurchgangsloch (7a), einem zweiten Gewindedurchgangsloch (7b) und einem dritten Gewindedurchgangsloch (7c), wobei jedes Gewindeloch (7a, 7b, 7c) eine jeweilige Ausrichtungsachse (X, Y, Z) für die Komponente (100) definiert, wobei jedes Gewindeloch (7a, 7b, 7c) den gleichen Durchmesser der ersten, zweiten bzw. dritten Bolzen (3a, 3b, 1) aufweist, sowie, in der Grundplatte (B), von einem Gewindeloch (50),
- Koppeln (330) jeder Stellschraube (30a, 30b, 30c) des ersten, zweiten und dritten Bolzen (3a, 3b, 1) mit dem ersten, zweiten bzw. dritten Gewindedurchgangsloch (7a, 7b, 7c),
- derartiges Verschrauben (340) der Stellschrauben (30a, 30b, 30c) in den Gewindedurchgangslöchern (7a, 7b, 7c), dass ein jeweiliges axiales Ende jeder Schraube (30a, 30b, 30c) mit der Grundplatte (B) in Kontakt kommt, um jeweils die Position der Komponente (100) entlang jeder Achse (X, Y, Z) zu definieren,
- Blockieren (350) der Stellschrauben (30a, 30b, 30c) in den Gewindelöchern (7a, 7b, 7c) jeweils mit der Blockiermutter (4a, 4b, 4c),
- Verschrauben (360) der vierten Befestigungsschraube (5) in dem Gewindeloch (50) der Grundplatte (B), wodurch die Komponente (100) an der Grundplatte (B) befestigt wird;
wobei eine der Stellschrauben (30c) von einem der Bolzen (1) mit einem Durchgangsloch (40) koaxial zu der jeweiligen Ausrichtungsachse (Z) versehen ist, um die vierte Befestigungsschraube (5) aufzunehmen, wobei das Verfahren (300) ferner den Schritt des Einsetzens (360) der vierten Befestigungsschraube (5) in dem Durchgangsloch (40) der Stellschraube (30c) vor dem Verschrauben der vierten Befestigungsschraube (5) in dem Gewindeloch (50) der Grundplatte (B) einschließt.

## Revendications

1. Dispositif d'alignement (10) pour régler la position d'un composant (100) d'une turbomachine (200) par rapport à une plaque de base (B) de la turbomachine (200), dans lequel le dispositif d'alignement (10) inclut au moins un premier boulon (3a), un deuxième boulon (3b) et un troisième boulon (1), chaque boulon (3a, 3b, 1) incluant une vis de réglage (30a, 30b, 30c) respectivement couplée à un trou traversant taraudé dans ledit composant (100), chaque trou traversant taraudé définissant un axe d'alignement respectif (X, Y, Z) pour ledit composant (100), chaque vis ayant une extrémité axiale respective qui est susceptible d'entrer en contact avec ladite plaque de base (B) pour définir la position du composant (100) le long de chaque axe (X, Y, Z) respectivement, chaque boulon (3a, 3b, 1) incluant un écrou de blocage (4a, 4b, 4c) pour bloquer respectivement lesdites vis de réglage dans lesdits trous taraudés ;
le dispositif d'alignement (10) incluant en outre une quatrième vis de fixation (5) qui peut être vissée dans un trou taraudé (50) de la plaque de base (B) pour fixer ledit composant (100) à la plaque de base (B) ;
dans lequel l'une des vis de réglage (30c) de l'un desdits boulons (1) a un trou traversant (40) coaxial par rapport à l'axe d'alignement respectif (Z) pour loger ladite quatrième vis de fixation (5).

2. Turbomachine (200) incluant un composant (100) pouvant être fixé à une plaque de base (B) de ladite turbomachine (200) et un dispositif d'alignement (10) selon la revendication 1 pour régler la position dudit composant (100) par rapport à la plaque de base (B).

3. Turbomachine (200) selon la revendication 2, dans laquelle le diamètre dudit trou traversant (40) dans ladite vis de réglage (30c) est supérieur au diamètre de ladite quatrième vis de fixation (5) pour permettre l'alignement latéral.

4. Turbomachine (200) selon l'une quelconque des revendications 2 à 3, dans laquelle lesdits axes d'alignement (X, Y, Z) sont mutuellement orthogonaux.

5. Turbomachine (200) selon l'une quelconque des revendications 2 à 4, dans laquelle ledit composant (100) inclut une cavité interne (101), lesdites vis de réglage (30a, 30b, 30c) desdits boulons (3a, 3b, 1) et ladite vis de fixation (5) pouvant être actionnées depuis l'intérieur de ladite cavité interne (101) pour définir respectivement la position du composant (100) et pour fixer ledit composant (100) à la plaque de base (B).

6. Turbomachine (200) selon l'une quelconque des revendications 2 à 5, dans laquelle ladite turbomachine (200) est une turbine à gaz.

7. Turbomachine (200) selon l'une quelconque des revendications 2 à 6, dans laquelle ledit composant (100) est un plénum d'entrée de ladite turbomachine à turbine à gaz.

8. Procédé d'alignement (300) pour régler la position d'un composant (100) d'une turbomachine (200) par rapport à une plaque de base (B) de la turbomachine (200), dans lequel le procédé d'alignement inclut les étapes consistant à :
- fournir (310) au moins un premier boulon (3a), un deuxième boulon (3b) et un troisième boulon (1), chaque boulon (3a, 3b, 1) incluant une vis de réglage (30a, 30b, 30c) et un écrou de blocage (4a, 4b, 4c), ainsi qu'une quatrième vis de fixation (5),
- fournir (320), dans ledit composant (100), au moins un premier trou traversant taraudé (7a), un deuxième trou traversant taraudé (7b) et un troisième trou traversant taraudé (7c), chaque trou taraudé (7a, 7b, 7c) définissant un axe d'alignement respectif (X, Y, Z) pour ledit composant (100), chaque trou taraudé (7a, 7b, 7c) ayant le même diamètre que lesdits premier, deuxième et troisième boulons (3a, 3b, 1), respectivement, ainsi que, dans ladite plaque de base (B), un trou taraudé (50),
- coupler (330) chaque vis de réglage (30a, 30b, 30c) desdits premier, deuxième et troisième boulons (3a, 3b, 1) avec lesdits premier, deuxième et troisième trous traversants taraudés (7a, 7b, 7c), respectivement,
- visser (340) les vis de réglage (30a, 30b, 30c) dans les trous traversants taraudés (7a, 7b, 7c) de telle sorte qu'une extrémité axiale respective de chaque vis (30a, 30b, 30c) entre en contact avec ladite plaque de base (B) pour définir la position du composant (100) le long de chaque axe (X, Y, Z) respectivement,
- bloquer (350) lesdites vis de réglage (30a, 30b, 30c) dans lesdits trous traversants taraudés (7a, 7b, 7c) avec ledit écrou de blocage (4a, 4b, 4c), respectivement,
- visser (360) la quatrième vis de fixation (5) dans le trou taraudé (50) de la plaque de base (B), fixant de ce fait le composant (100) à la plaque de base (B) ;
dans lequel l'une des vis de réglage (30c) de l'un desdits boulons (1) est pourvue d'un trou traversant (40) coaxial par rapport à l'axe d'alignement respectif (Z) pour loger la quatrième vis de fixation (5), ledit procédé (300) incluant en outre l'étape d'insertion (360) de la quatrième vis de fixation (5) dans le trou traversant (40) de la vis de réglage (30c) avant le vissage de la quatrième vis de fixation (5) dans le trou taraudé (50) de la plaque de base (B).
